# EUROPEAN PATENT APPLICATION

(11) **EP 4 140 820 A1**
(43) Date of publication of application: **01.03.2023**
(21) Application number: 22166109.3
(22) Date of filing: 31.03.2022
(51) Int. Cl.: B60R 9/06, B60R 9/10, B60R 9/12

(54) **DEVICE FOR TRANSPORTING OBJECTS FOR VEHICLES**

(30) Priority: 27.08.2021 IT 202100004283 U
(71) Applicant: LCI ITALY S.R.L., 50026 San Casciano Val di Pesa (FI) (IT)
(72) Inventor: MESSERI, Matteo, 50126 Firenze (IT); BERNARDESCHI, Paolo, 56038 Ponsacco (Pisa) (IT)
(74) Representative: Firmati, Leonardo

(57) **Abstract**

Described is a device (1) for transporting objects for vehicles, comprising supporting elements configured to be stably constrained to the vehicle, uprights comprising constraining means (7) for constraining said uprights (4, 5) in any position of said supporting elements (2, 3), said uprights (4, 5) being slidably movable on said guides (6) when said constraining means (7) are not in the locked configuration.

## Description

This invention relates to a device for transporting objects for vehicles.

More specifically, the invention relates to devices for transporting objects secured and constrained to the outside of a vertical rear door or a vertical rear panel of vans, minivans, campervans or the like, also called "recreational vehicles" or "commercial vehicles".

The usable space inside the above-mentioned vehicles is usually used, during travel, for transporting the occupants of the vehicle and the various accessories inside the vehicle; the need is therefore always felt of creating housings outside the vehicle designed to increase the load capacity of the vehicle.

In particular, the devices such as the one according to the invention allow the transport of objects, which are often bulky, such as bicycles, surfboards, skis or any object which would be not easily located and fixable inside the vehicle.

The need to position these objects outside is also often due to the high risk of damaging the inside of the vehicle with the objects themselves, in particular if they are not well constrained.

In this regard, there are currently various prior art solutions designed to constrain objects on the outer vertical surfaces of a vehicle.

According to a prior art solution, a rigid structure is used to fix to the rear portion of the vehicle, for example to a door.

The structure generally comprises two horizontal elements which are fixed to the side edges of the door of the vehicle and which determine the anchoring point to it.

A vertical connecting frame is secured in a stable manner to the above-mentioned horizontal elements, on which it is possible to install adequate gripping means specifically for the above-mentioned objects to be transported (for example in the case of transporting bicycles: one or more lower rails and one or more upper gripping means).

This prior art solution, whilst on the one hand it allows a predetermined type of object to be securely constrained to the outside of a vehicle, on the other hand it does not allow any adaptability by the transport device to the various types of objects.

This drawback is due in particular to the fixed shape of the frame constrained to the horizontal elements.

In fact, the frame, having a fixed geometry, does not adapt well to being used for different types of objects other than those for which it is specifically designed (bicycles, skis...) .

This translates into a significant limitation in use by the operator.

The aim of the invention is therefore to provide a device for transporting objects for vehicles which is able to overcome the above-mentioned drawbacks of the prior art and provide a transport device which is able to adapt to a multiplicity of objects to be transported without the need to vary the basic structure.

A further aim of the invention is to provide a device for transporting objects for vehicles which is at the same time practical to use and simple and inexpensive to make.

According to the invention, these aims and others are achieved by a device for transporting objects for vehicles having the technical features described in the appended claims.

The technical features of the invention, with reference to the above-mentioned aims, are clearly described in the appended claims and its advantages are apparent from the detailed description which follows, with reference to the accompanying drawings which illustrate a purely non-limiting example embodiment of the invention, in which:

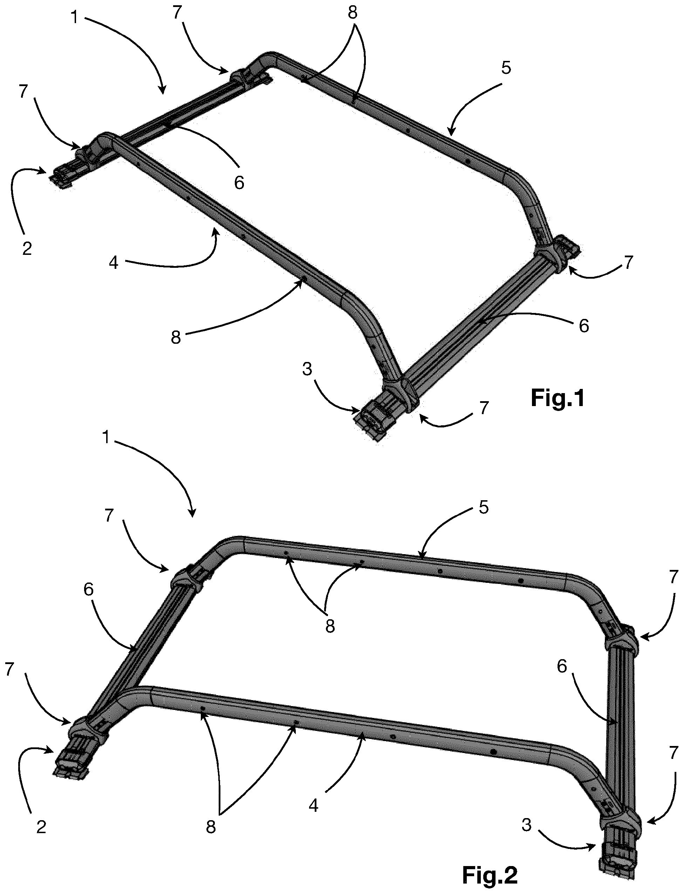

- Figure 1 is a first axonometric view of a device for transporting objects for vehicles according to the invention;
- Figure 2 is a second axonometric side view of the device of Figure 1;
- Figure 3 is an axonometric view of a device for transporting objects for vehicles according to the invention provided with restraint means for bicycles and
- Figure 4 is an axonometric view of a device for transporting objects for vehicles according to the invention provided with restraint means for skis.

With reference to the accompanying drawings, the numeral 1 denotes in its entirety a device for transporting objects on vertical panels of vehicles made in accordance with the invention, hereinafter also referred to simply as the device 1.

In this description, the term "vertical panel" means, without distinction, a rear door which can be opened (for example, if the vehicle is a van or a truck) or a fixed vertical panel of a vehicle (for example if the vehicle is a motorhome with a "mansard" type roof). With reference to the accompanying drawings, the device 1 for transporting objects for vehicles comprises a first 2 and a second 3 supporting element (transversal members) configured for being stably constrained to the vertical panel of a vehicle.

The supporting elements 2, 3 are constrained in a horizontal position with the relative ends on opposite vertical and lateral edges of a rear door of the vehicle. The ends of the elements 2, 3 comprise fixing means, for example having a C-shaped cross-section, such as to allow the fixing of the elements to the rear door of the vehicle by increase in friction.

Advantageously, the supporting elements 2, 3 are also glued by means of suitable adhesives to the vertical panel of the vehicle.

The first 2 and the second 3 supporting element each comprise a respective attachment guide 6 extending substantially over the entire length of the support elements 2, 3.

If, therefore, the supporting elements 2, 3 have a length equal to the width of the rear door of the vehicle to which the respective guides 6 are constrained, they also have substantially the same length.

The device 1 also comprises a first 4 and a second 5 which comprise constraining means 7 for constraining the uprights 4, 5 in any position of the guides 6 of the supporting elements 2, 3.

The positioning of the uprights 4, 5 is independent of each other in such a way as to vary, as chosen by the user, the distance between them.

The constraining means 7 are movable between a free configuration at which a sliding of the uprights 4, 5 is allowed on the guides 6 of the supporting elements 2, 3; and a locked configuration of the uprights 4, 5 at which their position on the guides 6 of the supporting elements 2, 3 is stably maintained, that is to say, the sliding of the uprights 4, 5 on the guides 6 is prevented.

The uprights 4, 5 are positioned perpendicularly to the supporting elements 2, 3 and can be fixed to them by tightening the above-mentioned constraining means 7. The first 4 and the second 5 upright, once engaged on the guides 6, are therefore slidably movable on the guides until the constraining means 7 are in a locked configuration of the uprights 4, 5.

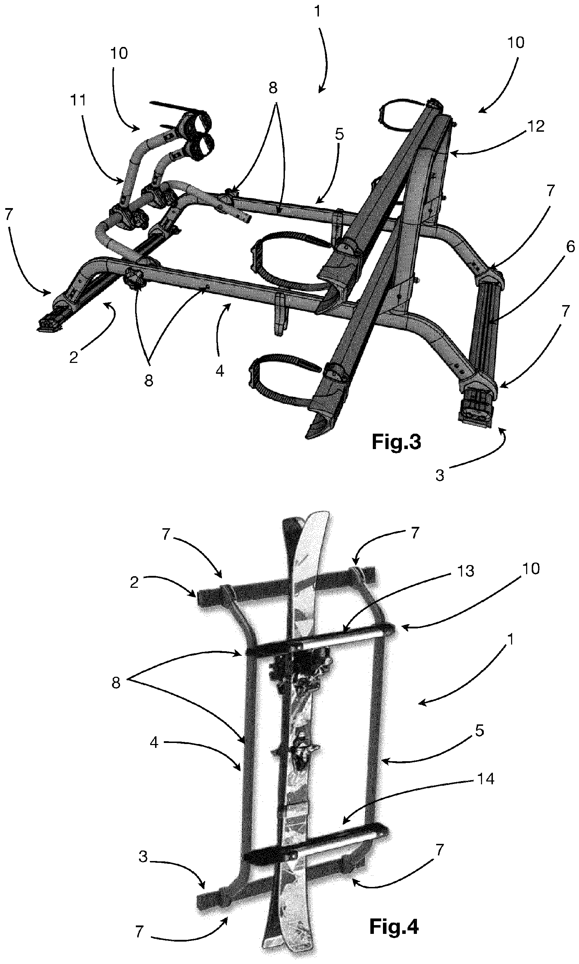

The uprights 4, 5 are therefore parallel to each other and perpendicular to the supporting elements 2, 3. The possibility of sliding the uprights 4, 5 on the respective guides 6 in an independent fashion advantageously allows the reciprocal distance of the two uprights 4, 5 to be varied and thereby adapt the device 1 to the various types of objects (using suitable accessories 10, as shown in Figures 3 and 4). Advantageously, the supporting elements 2, 3 comprise a linear profiled section and the guides 6 are made in the form of a recess made on the entire length of the above-mentioned profiled sections.

Advantageously, the recess of the guide 6 is facing the opposite side relative to that where the uprights 4, 5 are installed.

Since it is assembled on a vertical panel, this translates into the fact that there is no portion open at the top of the recess, and it is completely covered at the top.

In this way it is possible to prevent the entry of foreign bodies and dirt inside the guide 6.

The recess of the guides 6 advantageously has an upturned T-shaped cross-section in such a way as to allow it to be maintained inside the guide 6, for example a head of a screw associated with the constraining means 7. Advantageously, in effect, the constraining means 7 comprise at least one screw-nut system in which the head of the screw is shaped to match the transversal cross-section of the guides 6 in such a way as to be locked inside them in one direction.

Advantageously, the guides 6 comprise a plurality of screw/nut systems set up and positioned at predetermined distances, each corresponding to a possible position of the first 4 or second 5 upright.

By means of this solution it is possible to obtain a suitable support for the vertical forces of the uprights 4, 5 on the elements 2, 3 even without locking the constraining means 7.

As mentioned, advantageously, the uprights 4, 5 are movable independently from each other on the guides 6 so as to be able to vary the relative distance from each other as a function of the accessories 10 for directly retaining the objects to be transported.

As shown in the drawings, advantageously, the uprights 4, 5 have a curved shape.

The expression "curved shape" means that the uprights 4, 5 have a central portion with longitudinal extension and two end portions connecting to the supporting elements 2, 3, with these portions at least partly curved relative to the central portion to determine a moving away of the central portion relative to the plane defined by the two supporting elements 2, 3, that is to say, from the vertical panel of the vehicle.

This curved shape therefore advantageously allows the objects transported to be spaced from the surface of the vehicle on which the device 1 is installed, thus preventing any damage to the device as well as facilitating the operations for fixing the objects to be transported.

Advantageously, the uprights 4, 5 comprise a plurality of fixing means 8, for example a plurality of holes, shown in the drawings, configured for providing a fixing point for accessories 10 for directly retaining objects on the uprights 4, 5.

More in detail, the plurality of fixing means 8 made on the uprights 4, 5 is advantageously positioned in such a way as to cover the entire length of the uprights 4, 5 and thus allow the installation of many types of accessories 10.

In effect, in use, some accessories 10 are constrained to predetermined fixing means 8 whilst other accessories are constrained to different fixing means 8 located at different heights.

Advantageously, the supporting elements 2, 3 and the uprights 4, 5 are made of aluminium.

The use of aluminium makes it possible to obtain, with the same total weight, a considerable structural strength of the device 1 in its entirety.

Figure 3 shows an embodiment of a device 1 according to the invention on which is installed an accessory 10 for safely transporting bicycles.

In this case, the distance of the uprights 4, 5 is defined by the dimensions of the upper support 11 and the lower support 12 of the accessory 10.

Figure 4 shows an embodiment of a device 1 according to the invention on which is installed an accessory 10 for safely transporting skis or snowboards.

In this case, the distance of the uprights 4, 5 is defined by the dimensions of the upper support 13 and the lower support 14 of the accessory 10.

The device 1 for transporting objects for vehicles according to the invention achieves the pre-set aims and brings important advantages.

A first important advantage consists in the fact that a device 1 for transporting objects on a vertical panel of vehicles according to the invention makes it possible, with the use of a base structure comprising the two uprights 4, 5 which can be positioned on the supporting elements 2, 3 independently, to install on the same device 1 different types of accessories 10 which may become necessary each time (carrier for bicycles, skis, surfboards, containers...) .

A further advantage consists in the fact that a device 1 for transporting objects for vehicles according to the invention is easy and inexpensive to make since the two uprights 4, 5 have the same geometries and dimensions, as do the two supporting elements 2, 3, thus reducing the complexity of the production process.

## Claims

1. A device (1) for transporting objects on vertical panels of a vehicle, comprising:
- a first (2) and a second (3) supporting element configured for being stably constrained to said vehicle, said first (2) and said second (3) supporting element each comprising a respective attachment guide (6) extending substantially over the entire length of said supporting elements (2, 3),
a first (4) and a second (5) upright comprising constraining means (7) for constraining the uprights (4, 5) in any position of said guides (6) of said supporting elements (2, 3), said constraining means (7) being movable between a free configuration in which said uprights (4, 5) can slide on said guides (6) of said first and second supporting elements (2, 3), and a locked configuration of said uprights (4, 5) at which the position of said uprights (4, 5) on said guides (6) of said first and second supporting elements (2, 3) is stably maintained, said first (4) and said second (5) upright being slidably movable on said guides (6) when said constraining means (7) are not in a locked configuration of said uprights (4, 5), said uprights (4, 5) being movable independently of each other on said guides (6) for varying their distance from each other.

2. The device (1) according to the preceding claim, wherein said supporting elements (2, 3) comprise a linear profiled section and said guides (6) are made with a recess formed on the entire length of said profiled sections.

3. The device (1) according to any one of the preceding claims, wherein said constraining means (7) comprise a screw-nut system with the head of said screw shaped to match said guides (6).

4. The device (1) according to any one of the preceding claims, wherein said uprights (4, 5) have a curved shape.

5. The device (1) according to any one of the preceding claims, wherein said uprights (4, 5) comprise a plurality of fixing means (8) configured for providing a fixing point to accessories (10) for directly retaining objects on the uprights (4, 5).

6. The device (1) according to the preceding claim, wherein said plurality of fixing means (8) comprises a plurality of through holes on said uprights (4, 5).

7. The device (1) according to any one of the preceding claims, wherein said supporting elements (2, 3) and said uprights (4, 5) are made of aluminium.

8. The device (1) according to any one of the preceding claims, wherein said elements (2, 3) comprise, at the relative ends, constraining means having a C-shaped cross-section, said ends being shaped to match the thickness of said vertical panel for constraining said elements (2, 3) to the panel in a stable fashion.

9. The device (1) according to any one of the preceding claims, wherein said supporting elements (2, 3) are glued to said vertical panel of said vehicle.

10. A vehicle having a rear vertical panel **characterised in that** it comprises, constrained at said rear vertical panel, a device (1) according to any one of claims 1 to 7.
